# EUROPÄISCHE PATENTSCHRIFT

(11) **EP 0 988 196 B1**
(45) Veröffentlichungstag und Bekanntmachung des Hinweises auf die Patenterteilung: **19.09.2001**
(21) Anmeldenummer: 98938610.7
(22) Anmeldetag: 15.06.1998
(51) Int. Cl.: B60S 9/12, B60P 1/48

(54) **HECKABSTÜTZUNG FÜR SCHWERLASTFAHRZEUG MIT SELBSTLADEEINRICHTUNG**
REAR SUPPORT FOR A HEAVY GOODS VEHICLE WITH AN AUTOMATIC LOADING DEVICE
SUPPORT DE PARTIE ARRIERE POUR VEHICULE POUR CHARGES LOURDES POURVU D'UN DISPOSITIF DE CHARGEMENT AUTOMATIQUE

(30) Priorität: 15.06.1997 DE 29710956 U
(43) Veröffentlichungstag der Anmeldung: 29.03.2000
(73) Patentinhaber: KIROW Leipzig KE Kranbau Eberswalde AG, 04179 Leipzig (DE)
(72) Erfinder: HEBER, Erich, D-88480 Achstetten (DE)
(74) Vertreter: Effert, Bressel und Kollegen
(86) Internationale Anmeldenummer: EP9803578
(87) Internationale Veröffentlichungsnummer: WO9857831

(56) Entgegenhaltungen:
- WO-A-89/06611
- DE-A- 3 343 343
- US-A- 4 930 972

## Beschreibung

Die Erfindung betrifft ein Schwerlastfahrzeug mit einer Selbstladeeinrichtung für schwere Lasten, angeordnet auf einem Fahrzeugrahmen, dessen Ende über ein Hinterrad hinausragt und unterseitig eine Stützeinrichtung zur Abstützung des Hecks auf einer hydraulisch ausfahrbaren Bodenplatte aufweist.

Ein gattungsgemäßes Fahrzeug ist aus der DE 36 05 665 C2 bekannt, welches zum Anheben, Transportieren und Kippen eines mit seitlichen Drehzapfen versehenen Schlackebehälters oder dergleichen vorgesehen ist und ein Schwinggestell am Heck aufweist, mit dem die Schlackenbehälter über das Heck auf das Fahrzeug schwenkend gehoben werden oder abgesetzt werden können und welche ein hydraulisches Betätigungsorgan hinter dem Hinterrad unter dem Rahmen aufweist für einen Auslegerfuß, der sich auf dem Boden abstützen kann.

Diese beiden heckseitigen Abstützvorrichtungen unter beiden seitlichen Fahrzeugenden sind erforderlich, um die Standsicherheit des Fahrzeuges, während des Bewegens der schweren Last zu gewährleisten. Bei der gattungsgemäßen Vorrichtung ist die Kolbenstange im ausgefahrenen Zustand den aggressiven Einflüssen im Hüttenwerk, z.B. Schlackenspritzern, säurehaltigem Regen und ähnlichem ausgesetzt und kann daher stark beschädigt werden bis zur Blockade. Die Bodenplatte ist schwenkbeweglich am Kolbenstangenauge befestigt und kann daher kippen.
Die Ausbildung der Abstützvorrichtung als separates Bauteil, welches angeschweißt oder angeschraubt wird an den Fahrzeugrahmen, macht es in den meisten Fällen notwendig, den Fahrantrieb des Fahrzeugs abzuschalten, wenn die Abstützung ausgefahren ist, um Schäden beim unbeabsichtigten Anfahren zu vermeiden. Die Fahrantriebsabschaltung hat jedoch zur Folge, daß auch in einer Notsituation das Fahrzeug mit ausgefahrener Abstützung nicht weggefahren werden kann.

Von daher liegt der Erfindung das Problem zugrunde eine verbesserte, den Betriebsbedingungen angepaßte, Stützeinrichtung vorzuschlagen.

Das Problem wird erfindungsgemäß durch die Merkmale des Schutzanspruches 1 gelöst. Weiterbildende Merkmale der Erfindung sind in den Unteransprüchen erfaßt.

Die erfindungsgemäße Lösung sieht eine Stützeinrichtung vor, die aus zwei teleskopartig ineinander verschiebbaren stabilen Gehäusen besteht, von denen das äußere Gehäuse direkt in den Fahrzeugrahmen integriert wird und dadurch sehr hohe Stabilität gewinnt. Ein inneres Gehäuse, mit Gleitplatten, die als Schleißplatten auf das innere Gehäuse aufgebracht werden können, gleitet in dem äußeren Gehäuse, ist aber in sich als stabile Schweißkonstruktion ausgebildet oder besteht aus entsprechend zusammengefügten Stahlblechen. Das innere Gehäuse umgibt den Hydraulikzylinder, der die Beweglichkeit des inneren Gehäuses gegenüber dem äußeren Gehäuse in Längsrichtung der beiden Gehäuse ermöglicht. Ein so geschützter Hydraulikzylinder bleibt langfristig funktionsfähig und dessen schwächstes Teil, die Kolbenstange, kann nicht durch äußere Gewalt verbogen werden.

Das innere Gehäuse wird bodenseitig gemäß einem weiteren Merkmal der Erfindung durch eine vorgeschweißte Bodenplatte verschlossen, wobei diese Bodenplatte horizontal zum Fahrwerksrahmen angeordnet ist. Dadurch kann die Bodenplatte bei einem kleinen Hindernis, wie einem Stein, nicht wegkippen, sondern wird in der vorgegebenen Lage auf den Boden gepreßt.

In Fahrzeuglängsrichtung hat die Bodenplatte vorne und hinten Kufen, so daß auch bei einem unbeabsichtigten Anfahren des Fahrzeuges die Bodenplatte und/oder der Zylinder nicht abgerissen werden können, sondern der Stützfuß über Hindernisse hinweggleiten kann.

Zur Berücksichtigung von Montagefehlern oder Biegebelastung bei Überlast ist die Kolbenstange mit ihrem Auge als schwenkbewegliches Element im inneren Gehäuse gelagert mit entsprechend stabilen Augenbolzen.

Der Zylinder selbst ist innerhalb des Fahrzeugrahmens, also am steifsten Teil, durch einen stabilen, integrierten Bolzen gehalten, welcher auch als integrierter Doppelbolzen ausgeführt sein kann. Durch die Integration der Gehäuse in den Fahrzeugrahmen können auch die Hydraulikleitungen sicher im Fahrzeugrahmen geführt werden.

Anhand einer schematischen Zeichnung soll die Erfindung näher erläutert werden. Es zeigen
- Figur 1: eine Seitenansicht mit Teilschnitt durch die Stützeinrichtung;
- Figur 2: ein Schnitt entlang der Längsachse der Stützeinrichtung gemäß Figur 1;
- Figur 3: eine erfindungsgemäße Stützeinrichtung integriert in den Fahrzeugrahmen eines Schlacketransporters.

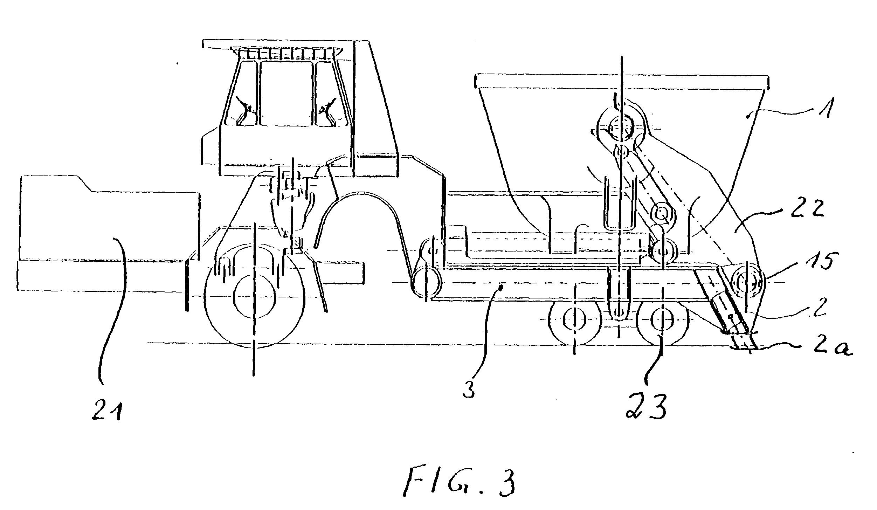

Figur 3 zeigt ein Schwerlastfahrzeug, hier ein Schlacketransporter mit Triebkopf 21 und Lastplattform 3 auf einem Fahrwerk 23 zum Transport eines Schlackekübels 1. Gezeigt ist die Situation, bevor der Kübel von dem Fahrzeug mit Hilfe der Selbstladeeinrichtung 22 von dem Fahrzeug geladen werden soll, in dem die Schwenkeinrichtung 22 um das Schwenkgelenk 15 bewegt wird und so den Kübel 1 hinter dem Fahrzeug absetzen kann. Vor Einleitung der Schwenkbewegung wird eine Stützeinrichtung aus der Fahrposition 2 in die Entladeposition 2a auf den Boden gefahren, damit das Fahrzeugheck abgestützt wird und das Fahrzeug nicht um die Radachse des Rades 23 kippen kann.

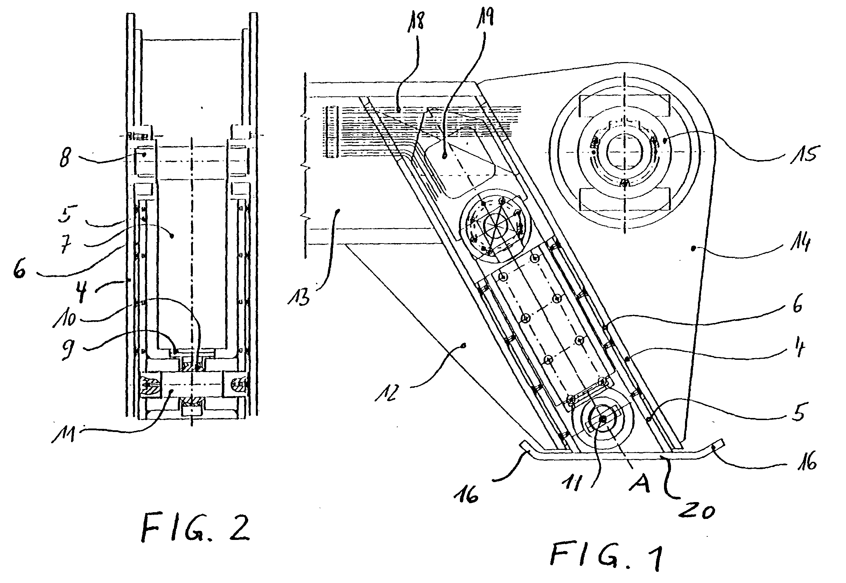

Figur 1 zeigt die Stützeinrichtung 2 in vergrößerter Ansicht. In das Fahrzeugrahmenende 13 integriert ist ein äußeres Gehäuse 4 aus Stahlblechen und zusätzlich mit Zwickelblech 12 und der massiven Lagerplatte 14 für die Schwenklagerung 15 der Schwenkeinrichtung 22 fest verbunden. In dem äußeren Gehäuse 4 ist ein inneres stabiles Gehäuse 5 aus Stahlblechen integriert, welches in Richtung der Gehäuseachse A beweglich ist durch einen Zylinder 7 (Figur 2). Das innere Gehäuse 5 ist zum Boden hin durch eine Bodenplatte 20 verschlossen, welche vorn und hinten Kufen 16 aufweist. Auf das innere rechteckige Gehäuse sind Gleitplatten 6 aufgeschraubt, so daß das innere Gehäuse 4 in dem äußeren Gehäuse 5 gleitgelagert ist. Im Fahrzeugrahmen sind die Hydraulikleitungen 18 für den Zylinder 7 und die Selbstladeeinrichtung 22 geführt, welche durch eine Revisionsklappe 19 im Fahrzeugrahmen bzw. im äußeren Gehäuse 4 zugänglich sind.

Figur 2 zeigt einen Schnitt entlang der Längsachse A durch die beiden Gehäuse. Die Kolbenstange 9 hat ein integriertes Gelenklager 10, welches über einen Bolzen 11 im inneren, beweglichen, kastenartigen Gehäuse 5 gelagert ist. Der Zylinder 7 ist am Fahrzeugende über Bolzen 8 im äußeren Kastenträger oder äußeren Gehäuse 4 gehalten. in seiner Lage ist der Zylinder allseitig gegen Umgebungseinflüsse geschützt, auch wenn das innere Gehäuse in die Stellung 2 a (Figur 3) ausgefahren ist.

## Patentansprüche

1. Schwerlastfahrzeug mit einer Selbstladeeinrichtung (22) für schwere Lasten, angeordnet auf einem Fahrzeugrahmen, dessen Ende (13) über ein Hinterrad (23) hinausragt und unterseitig eine Stützeinrichtung (2, 2a) mit zwei stabilen Gehäusen (4, 5) zur Abstützung des Hecks auf einer hydraulisch ausfahrbaren Bodenplatte (20) aufweist, **dadurch gekennzeichnet, daß** ein äußeres Gehäuse (4) in den Fahrzeugrahmen (13) integriert ist und ein inneres geschlossenes Gehäuse (5) einen Hydraulikzylinder (7) umgibt, mit dem das innere Gehäuse in Richtung Gehäuseachse (A) bewegbar ist.

2. Schwerlastfahrzeug nach Anspruch 1, **dadurch gekennzeichnet, daß** das innere Gehäuse (5) bodenseitig durch eine angeschweißte Bodenplatte (20) verschlossen ist.

3. Schwerlastfahrzeug nach Anspruch 1 oder 2, **dadurch gekennzeichnet, daß** die Bodenplatte (20) mindestens in Fahrzeuglängsrichtung vorn und hinten Kufen (16) aufweist.

4. Schwerlastfahrzeug nach einem der vorhergehenden Ansprüche, **dadurch gekennzeichnet, daß** die Kolbenstange (9) mittels integriertem Gelenklager (10) im inneren Gehäuse (5) schwenkbeweglich gelagert ist.

5. Schwerlastfahrzeug nach einem der vorhergehenden Ansprüche, **dadurch gekennzeichnet, daß** das innere Gehäuse (5) im äußeren Gehäuse (4) durch Gleitplatten (6) geführt wird.

6. Schwerlastfahrzeug nach einem der vorhergehenden Ansprüche, **dadurch gekennzeichnet, daß** der Zylinder (7) innerhalb des Fahrzeugrahmens (13) durch Bolzen (8) im äusseren Gehäuse (4) gehalten wird.

## Claims

1. Heavy goods vehicle with an automatic loading device (22) for heavy loads, which is arranged on a vehicle frame with the end (13) thereof protrudes beyond a rear wheel (23) and comprises a support device (2, 2a) having two solid casings (4, 5) underneath to support the tail on a hydraulically operated telescopic base plate (20)
**characterized in that** an outer casing (4) is integrated into said vehicle frame (13), and that an inner closed casing (5) encompasses a hydraulic cylinder (7) by means of which said inner casing is movable in the direction of the casing axis (A).

2. Heavy goods vehicle as claimed in claim 1
**characterized in that** said inner casing (5) is sealed by a welded on base plate (20) on the bottom side.

3. Heavy goods vehicle as claimed in claims 1 or 2
**characterized in that** said base plate (20) at least in the longitudinal direction of the vehicle comprises runners (16) at the front and at the back.

4. Heavy goods vehicle as claimed in any one of the preceding claims
**characterized in that** the piston rod (9) is swirelably movable supported within said inner casing (5) by means of an integrated rocker bearing (10).

5. Heavy goods vehicle as claimed in any one of the preceding claims
**characterized in that** said inner casing (5) is guided within said outer casing (4) by means of sliding plates (6).

6. Heavy goods vehicle as claimed in any one of the preceding claims
**characterized in that** within said vehicle frame (13) said cylinder (7) is retained by bolts (8) in said outer casing (4).

## Revendications

1. Véhicule pour charges lourdes avec un dispositif de chargement automatique (22) pour charges lourdes, disposé sur un châssis de véhicule dont l'extrémité (13) dépasse par-dessus une roue arrière (23) et est muni du côté inférieur d'un dispositif d'appui (2, 2a) avec deux solides boîtiers (4, 5) pour soutenir l'arrière sur une plaque de base (20) pouvant être sortie par un mouvement hydraulique, **caractérisé en ce qu'**un boîtier extérieur (4) est intégré dans le châssis du véhicule (13) et un boîtier intérieur fermé (5) entoure un vérin hydraulique (7) au moyen duquel le boîtier intérieur peut être déplacé en direction de l'axe du boîtier (A).

2. Véhicule pour charges lourdes selon la revendication 1, **caractérisé en ce que**, du côté dirigé vers le sol, le boîtier intérieur (5) est fermé par une plaque de base (20) soudée sur le boîtier.

3. Véhicule pour charges lourdes selon la revendication 1 ou 2, **caractérisé en ce qu'**au moins dans la direction longitudinale du véhicule la plaque de base (20) est munie à l'avant et à l'arrière de patins (16).

4. Véhicule pour charges lourdes selon l'une des revendications précédentes, **caractérisé en ce que** la tige de piston (9) est logée de manière pivotante dans le boîtier intérieur (5) au moyen d'un palier articulé (10) intégré.

5. Véhicule pour charges lourdes selon l'une des revendications précédentes, **caractérisé en ce que** le boîtier intérieur (5) est guidé dans le boîtier extérieur (4) par des plaques coulissantes (6).

6. Véhicule pour charges lourdes selon l'une des revendications précédentes, **caractérisé en ce qu'**à l'intérieur châssis du véhicule (13) le vérin (7) est maintenu dans le boîtier extérieur (4) par des goujons (8).
